(19) Europäisches Patentamt

European Patent Office

Office européen des brevets

(11) **EP 1 642 690 A2**

(12) **EUROPEAN PATENT APPLICATION**

(43) Date of publication:
**05.04.2006 Bulletin 2006/14**

(51) Int Cl.:
***B25J 9/16*** *(2006.01)*

(21) Application number: **05021015.2**

(22) Date of filing: **27.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.09.2004 JP 2004285344**

(71) Applicant: **FANUC LTD**
**Minamitsuru-gun,**
**Yamanashi 401-0597 (JP)**

(72) Inventors:
 • **Kato, Tetsuaki**
  **Hadano-shi**
  **Kanagawa 259-1326 (JP)**
 • **Tsuchida, Yukinobu**
  **FANUC Manshonharimomi**
  **Minamitsuru-gun**
  **Yamanashi 401-0511 (JP)**

 • **Nagayama, Atsuo**
  **Daiaparesu-Takasakikannonzan**
  **Takasaki-shi**
  **Gunma 370-0867 (JP)**
 • **Ichinose, Masakazu**
  **FANUC Dai3virakaramatsu**
  **Minamitsuru-gun**
  **Yamanashi 401-0511 (JP)**
 • **Hamada, Toshihiko**
  **FANUC Dai3virakaramatsu**
  **Minamitsuru-gun**
  **Yamanashi 401-0511 (JP)**

(74) Representative: **Schmidt, Steffen J.**
**Wuesthoff & Wuesthoff,**
**Patent- und Rechtsanwälte,**
**Schweigerstrasse 2**
**81541 München (DE)**

(54) **Method for controlling trajectory of robot**

(57) A method for controlling the trajectory of a robot, in which, in the cooperative operation of a leading robot having a work tool and a tracking robot gripping a workpiece, the position and the orientation of the work tool may be desirably controlled, even when the interpolative motion is carried out. The robots are cooperatively controlled such that the position and the orientation of a first tool coordinate system set on the work tool attached to the leading robot is moved along a desired trajectory on a second tool coordinate system set on the workpiece gripped by the tracking robot. During a playback operation after a teaching operation, the interpolative position data of the tracking robot is calculated by using the interpolative position data of the leading robot and the relative positions and the relative orientations data of the robots. The invention may be applied to a manual feed. The trajectory may be smoothed by filtering the interpolative position data.

Fig.4

EP 1 642 690 A2

**Description**

BACKGROUND OF THE INVENTION

1. Field of the Invention

The present invention relates to a method for controlling a trajectory of a robot when a plurality of robots are operated by a cooperative control. For example, in the case of a welding operation by a cooperative control, the present invention relates to a method for obtaining the desired trajectories of a robot having a welding torch and a robot holding a workpiece to be welded.

2. Description of the Related Art

Recently, an operation which cannot be carried out by one robot is carried out by a "cooperative control" in which a plurality of robots are controlled such that the plurality of robots cooperate. Typically, by the cooperative control of a robot holding a welding torch and a robot holding a workpiece to be welded, welding may be carried along a predetermined trajectory or a welding line on the workpiece. For such a cooperative control, in prior art as disclosed in Japanese Patent Publication No. 3098618, a method for setting a reference point relative to a workpiece gripped by a robot is proposed. In the method, the position and the orientation of a work tool attached to another robot, relative to the reference point, is determined.

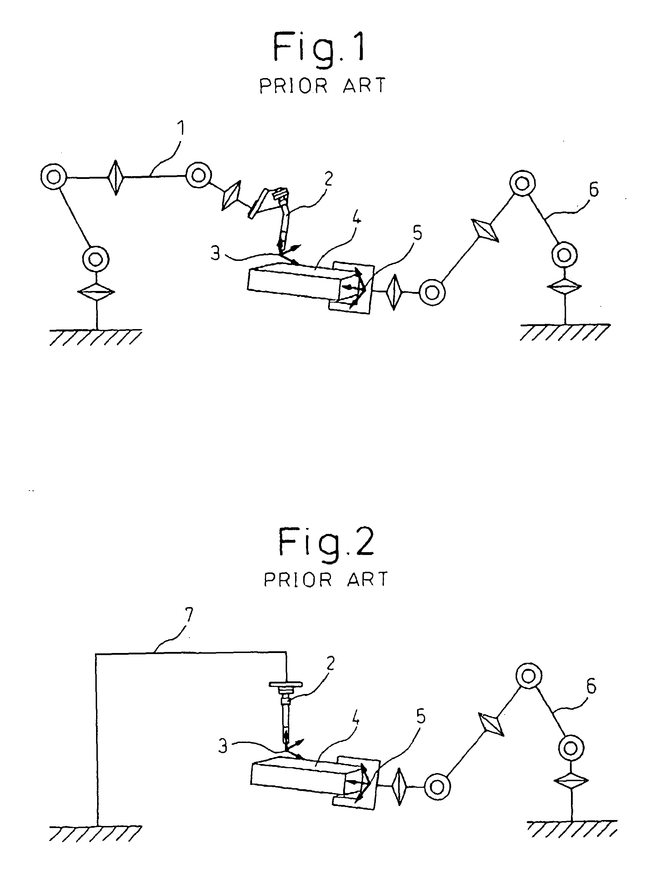

In other words, in the cooperative control as shown in Fig. 1, a robot 6 holding a workpiece 4 is a leading robot and a robot 1 having a work tool 2 is a tracking robot following the motion of the robot 6.

Also, Japanese Patent Publication No. 2691985 discloses a method for controlling a robot 6 holding a workpiece 4. In the method, as shown in Fig. 2, a tool 2 is fixed to the ground via a device 7 and the robot 6 is controlled such that a tool coordinate system 3 set on the work tool is moved along a desired trajectory on another coordinate system 5 set on the workpiece 4.

In addition, in relation to a fifth embodiment described below, Japanese Patent Publication No. 3098618 discloses a communication method for a plurality of control devices for controlling a plurality of robots.

However, the above prior art has problems as described below.

First, in the proposed control method described in Japanese Patent Publication No. 3098618, the work tool may be desirably positioned and oriented at each teaching point. However, in a playback operation, it is very difficult to desirably maintain the orientation of the work tool relative to the ground. This is because the interpolative orientation of the work tool between each of the teaching points is determined such that the interpolative orientation follows the interpolative position and the interpolative orientation of the robot holding the workpiece between each of the teaching points.

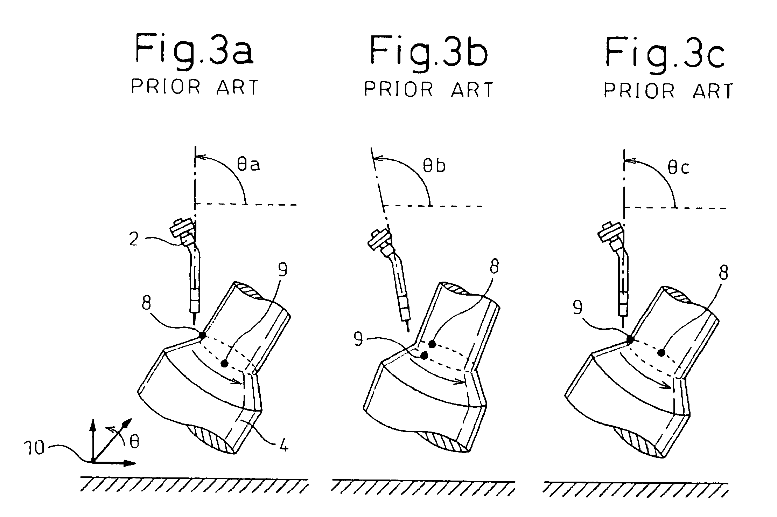

Figs. 3a to 3c illustrate the above state. In particular, Fig. 3a, 3c and 3b show conditions in which the work tool is positioned at a teaching point 8, a teaching point 9 and a certain interpolative point between the teaching points 8 and 9, respectively. At the teaching point 8 or 9 (Fig. 3a or 3c), it is possible to carry out the teaching such that the work tool is desirably oriented relative to a world coordinate system 10 fixed to the ground. On the other hand, at the interpolative point between the teaching points 8 and 9 (Fig. 3b), it is possible to maintain the orientation of the work tool 2 relative to the workpiece 4. However, as a robot having the work tool 2 is a tracking robot, it is very difficult to carry out the teaching for maintaining the orientation of the work tool relative to the world coordinate system 10, unless a large number of teaching points are arranged such that the distance between each teaching point is very short.

Needless to say, as the large number of teaching points may cause a problem regarding work efficiency, it is not practical to considerably increase the number of teaching points. It is important, in welding, to maintain the orientation of the work tool relative to the ground, in order to carry out welding with high quality. However, the control method described in Japanese Patent Publication No. 3098618 does not sufficiently satisfy this requirement.

In addition, in the control method described in Japanese Patent Publication No. 2691985, it is possible to move a coordinate system of the work tool along a desired trajectory on a coordinate system of the workpiece, while the orientation of the work tool relative to the ground is maintained. However, as the work tool is fixed to the position and the orientation within a limited range, the method may only be used for processing a workpiece with a simple shape.

SUMMARY OF THE INVENTION

Accordingly, in relation to the above problems of the prior art, an object of the present invention is to provide a method for controlling the trajectory of a robot, by which the robot having a work tool may be desirably positioned and orientated even when an interpolative operation is carried out, during a cooperative control of a plurality of robot.

The present invention employs, different from the prior art, a method for controlling a trajectory of a robot when a plurality of robots are operated by cooperative control, the plurality of robots including a leading robot having a work tool and at least one tracking robot holding a workpiece to be welded by the work tool, the method comprising controlling the position and the orientation of the tracking robot corresponding to the change of the position and the orientation of the leading robot such that the position and the orientation of a first tool coordinate system set on the leading robot moves along a desired trajectory on a second tool coordinate system set on the tracking robot, so as to resolve the above problems.

By means of the method, it is possible to carry out teaching such that the position and the orientation of the work tool are desirably determined even on an interpolative point between the adjacent teaching points. In this specification, "a tool coordinate system set on a leading robot" or a first tool coordinate system is a coordinate system representing the position and the orientation of a work tool attached to the leading robot and includes the origin and axes fixed to the work tool. As is known, the origin is referred as a tool center point (TCP) which is not necessarily positioned on the work tool. The TCP may include the direction, the TCP indicates the position and the orientation of the first tool coordinate system (i.e., the position and the orientation of the work tool attached to the leading robot). In the description below, the first coordinate system is also referred as "a coordinate system set on a work tool".

On the other hand, "a tool coordinate system set on a tracking robot" of a second tool coordinate system is a coordinate system representing the position and the orientation of a workpiece (considered as a "tool" in normal robotology) gripped by the tracking robot and includes the origin and axes fixed to the workpiece. Similarly to the first coordinate system set on the leading robot, the origin is referred as a TCP. Assuming that the TCP includes the direction, TCP indicates the position and the orientation of the second tool coordinate system (i.e., the position and the orientation of the workpiece gripped by the tracking robot). In the below description, the second coordinate system is also referred as "a coordinate system set on a workpiece".

Concretely, according to the present invention, there is provided a method for controlling a trajectory of a robot when a plurality of robots are operated by a cooperative control, the plurality of robots including a leading robot having a work tool and at least one tracking robot holding a workpiece to be processed by the work tool, the method comprising: controlling the position and the orientation of the tracking robot corresponding to the change of the position and the orientation of the leading robot such that the position and the orientation of a first tool coordinate system set on the leading robot moves along a desired trajectory on a second tool coordinate system set on the tracking robot.

The method may comprise: preparing a plurality of teaching points by teaching an operating position of each of the leading robot and the tracking robot; calculating the interpolative position and the interpolative orientation of the first tool coordinate system of the leading robot by interpolating the position and the orientation of the first coordinate system at the teaching points of the leading robot at every interpolative time during a playback operation; determining the relative position and the relative orientation of the first tool coordinate system of the leading robot to the second tool coordinate system of the tracking robot at every interpolative time by interpolating the relative position and the relative orientation of the first tool coordinate system at the teaching point; calculating the interpolative position and the interpolative orientation of the second tool coordinate system of the tracking robot based on the interpolative position and the interpolative orientation of the first tool coordinate system of the leading robot and the relative position and the relative orientation of the first tool coordinate system of the leading robot at every interpolative time; and controlling each joint of the leading robot and the tracking robot such that the positions and the orientations of the first and second coordinate systems are maintained.

The method may comprise controlling the position and the orientation of the tracking robot such that the relative position and the relative orientation of the tracking robot, to the leading robot, are maintained when the position and the orientation of the leading robot is changed by manual feeding.

The method may comprise manually feeding the tracking robot such that the second tool coordinate system is desirably translated and rotated on the first tool coordinate system.

The method may comprise cooperatively operating a plurality of tracking robots relative to the motion of one leading robot.

In the method, all of the leading robot and the tracking robot may be cooperatively controlled by using one control device. Alternatively, the leading robot and the tracking robot may be cooperatively controlled by using a plurality of control devices. In the latter case, the cooperative control may be carried out by communicating between each of the control devices.

A technique for smoothing by filtering, in relation to trajectory control by cooperation, may be used. For example, the method may comprise: filtering a time-series of data representing the interpolative position and the interpolative orientation of the first tool cooperative system of the leading robot; calculating the interpolative position and the interpolative orientation of the second tool coordinate system of the tracking robot based on the time-series of data before the filtering and the relative position and the relative orientation of the first coordinate system at every interpolative time; and filtering a time-series of data representing the interpolative position and the interpolative orientation of the second tool coordinate system of the tracking robot after calculating the interpolative position and the interpolative orientation of the second tool coordinate system.

Alternatively, the method may comprise: filtering a time-series of data representing the interpolative position and the interpolative orientation of the first tool cooperative system of the leading robot; filtering a time-series of data representing the relative position and the relative orientation of the first tool coordinate system of the leading robot at every interpolative time; and calculating the interpolative position and the interpolative orientation of the second tool coordinate system of the tracking robot based on the interpolative position and the interpolative orientation and the relative position and the relative orientation of the first tool coordinate system of the leading robot after the filtering.

BRIEF DESCRIPTION OF THE DRAWINGS

The above and other objects, features and advantages of the present invention will be made more apparent by the following description of the preferred embodiments thereof, with reference to the accompanying drawings, wherein:

Fig. 1 is a diagram for explaining one example of welding of the prior art by cooperative motions of two robot;
Fig. 2 is a diagram for explaining another example of welding of the prior art by cooperative motions of two robots;
Figs. 3a - 3c are diagrams for explaining difficulties in maintaining the orientation of the work tool relative to the ground in cooperative control of the prior art, representing conditions in which the work tool is positioned at a teaching point 8, at a certain interpolative point between the teaching point 8 and a teaching point 9, and at the teaching point 9, respectively;
Fig. 4 is a schematic diagram of a system used for a first embodiment of the present invention;
Fig. 5 is a block diagram of a robot control device and a robot mechanism;
Fig. 6 is a flowchart of a procedure for a setting operation of a robot;
Fig. 7 is a flowchart of a procedure for a teaching operation;
Fig. 8a and 8b are diagrams for explaining the teaching operation, representing a k-th teaching point and a k+1-th teaching point, respectively;
Fig. 9 is a flowchart for processing in a playback motion;
Fig. 10 is a flowchart for planning a path in the playback motion;
Fig. 11 is a flowchart of a procedure regarding interpolation of the motion in the playback motion in case of a first filtering mode;
Fig. 12 is a flowchart of a procedure regarding interpolation of the motion in the playback motion in case of a second filtering mode;
Fig. 13 is a diagram for explaining a second embodiment of the invention;
Fig. 14 is a flowchart for explaining a process in a manual feed;
Fig. 15 is a diagram for explaining a third embodiment of the invention;
Fig. 16 is a diagram for explaining a fourth embodiment of the invention; and
Fig. 17 is a diagram for explaining a fifth embodiment of the invention.

DETAILED DESCRIPTION

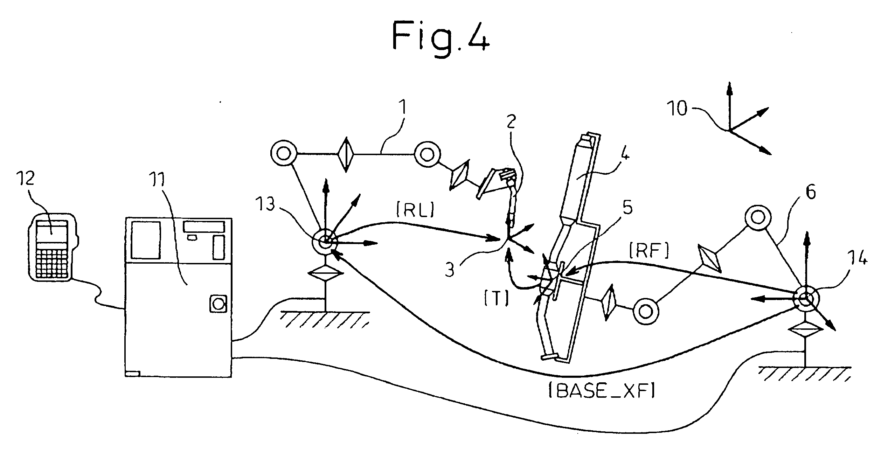

Hereinafter, with reference to Figs. 4 to 17, some embodiments according to the invention are described. Although a work tool (also called merely "a tool") attached to a leading robot is described as a welding torch (also called merely "a torch") for arc welding, the work tool may be another work tool corresponding to a kind of an operation, such as a laser machining head or a sealing gun.

First, Fig. 4 shows a schematic configuration of a system used for a first embodiment. The system includes a multi-joint robot 1 of six-degree of freedom having a welding torch as a work tool 2, a multi-joint robot 6 of six-degree of freedom gripping a workpiece 4 to be welded and a control device 11 for controlling the robots 1 and 6. A teaching panel 12 for teaching operation is connected to the control device 11.

As coordinate systems for controlling the trajectory of the robot, some coordinate systems are defined as below: a first referential coordinate system 13 fixed to a base of the robot 1, indicating a reference point of the robot 1 having the tool 2, uniquely determined by a location of the robot 1; a second referential coordinate system 14 fixed to a base of the robot 6, indicating a reference point of the robot 6 gripping the workpiece 4, uniquely determined by a location of the robot 6; a first coordinate system 3 set on the tool 2 and moving with the tool 2, indicating the position and the orientation of TCP of the robot 1; and a second coordinate system 5 set on the workpiece 4 and moving with the workpiece 4, indicating the position and the orientation of TCP of the robot 6. Further, a coordinate system 10 is a world coordinate system fixed to the ground.

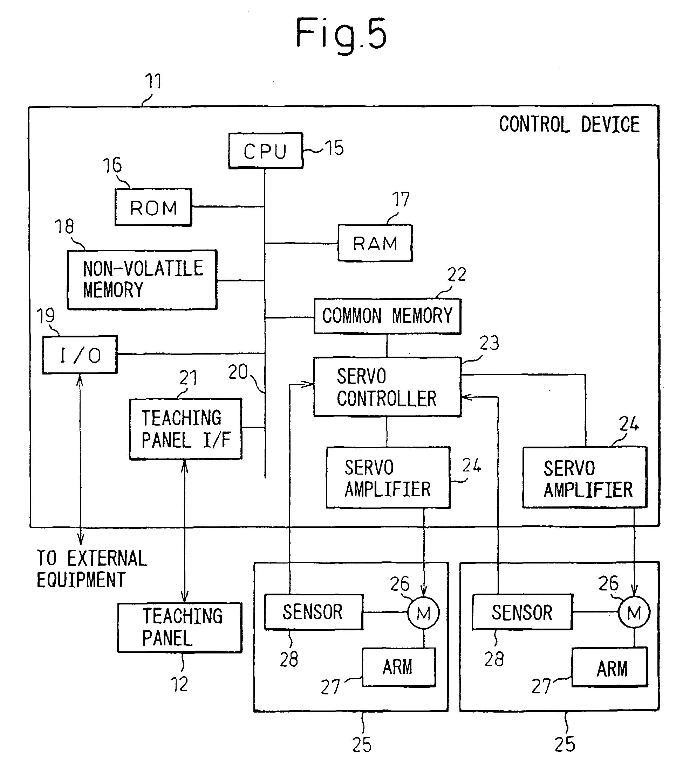

Fig. 5 shows constitutions of the control device 11 and a robot mechanism 25. The robot mechanism 25 in Fig. 5 schematically indicates robot mechanisms of the robots 1 and 6. In Fig. 5, a servomotor for one axis of each robot is illustrated.

The robot control device 11 includes a central processing unit (CPU) 15. Via a bus 20, a memory 16 having a ROM, a memory 17 having a RAM, a non-volatile memory 18, an I/O unit 19 for external equipment, an interface 21 for the teaching panel 12, and a common memory 22 of a servo controller 23 and the CPU 15 are connected to the CPU 15. The ROM 16 stores a program for controlling a whole system including the control device 11. The RAM 17 is used for temporarily storing data for a process carried out by the CPU 15. The non-volatile memory 18 stores program data of the robots 1 and 6, including a motion statement described below, and various parameters regarding the motion of each part of the system.

The servo controller 23 obtains information on the position of each motor 26 attached to a joint of each robot arm 27 of the robot mechanism 25 so as to control the motion of each motor 26 via each servo amplifier 24, based on a motion command from the CPU 15 and feedback data from each sensor 28.

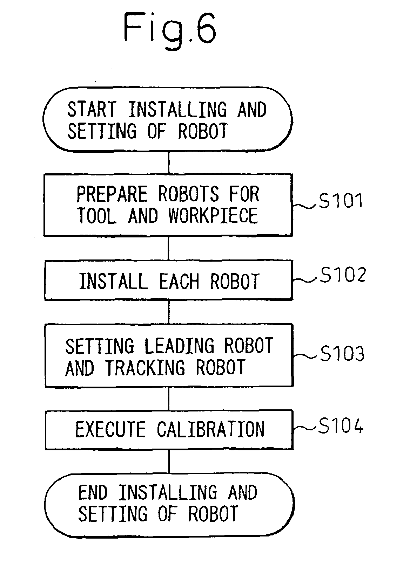

Next, according to a flowchart as shown in Fig. 6, installation and setting of each robot are described. In step S101, the robot 1 having the tool 2 attached thereto and the robot 6 gripping the workpiece 4, as shown in Fig. 4, are prepared. Then, in step S102, these robots are located such that the tool 2 may process the workpiece 4. When the robots are located, the positions and the orientations of the first and second referential coordinate systems 13 and 14 are uniquely determined relative to the ground.

In next step S103, the relation between a leading robot and a tracking robot, both cooperatively controlled, are determined. As described above, according to the feature of the invention, the robot 1 having the tool 2 is a leading robot and the robot 6 gripping the workpiece 4 is a tracking robot, in cooperative motion. The determined relation is stored is the non-volatile memory 18 in Fig. 5. Further, in step S104, the positions of the robots 1 and 6 relative to each other, as shown in Fig. 4, are calculated by calibration.

Such a calibration itself is a known technique. For example, as in the prior art, a rod for calibration is attached to a wrist of each of the two robots to be calibrated. Then, the end of the rod is arranged to coincide with the TCP of each robot. After that, the end of the rod is aligned with arbitrary three points not positioned on one straight line (i.e., forming a triangle), so as to calculate each position of the robots on each referential coordinate system.

Then, the position and the orientation of the first referential coordinate system 13 of the robot 1 relative to the second referential coordinate system 14 of the robot 6 may be calculated, based on the three-position data on the first referential coordinate system 13 of the leading robot 1 and the three-position data on the second referential coordinate system 14 of the tracking robot 6. The calculated result is stored in the non-volatile memory 18 as a homogeneous transformation matrix [BASE_XF]. Matrix elements of the matrix [BASE_XF] may be represented by an equation (1). In the equation, elements $l_x$ - $l_z$ each having a superscript "base_xf" represent the relative position of the first referential coordinate system 13 to the second referential coordinate system 14. Further, elements $n_x$ - $n_z$, $o_x$ - $o_z$ and $a_x$ - $a_z$ each having a superscript "base_xf" represent the relative orientation of the first referential coordinate system 13 to the second referential coordinate system 14.

$$[BASE\_XF] \simeq \begin{bmatrix} n_x^{base\_xf} & o_x^{base\_xf} & a_x^{base\_xf} & l_x^{base\_xf} \\ n_y^{base\_xf} & o_y^{base\_xf} & a_y^{base\_xf} & l_y^{base\_xf} \\ n_z^{base\_xf} & o_z^{base\_xf} & a_z^{base\_xf} & l_z^{base\_xf} \\ 0 & 0 & 0 & 1 \end{bmatrix} \quad \ldots \text{(Equation 1)}$$

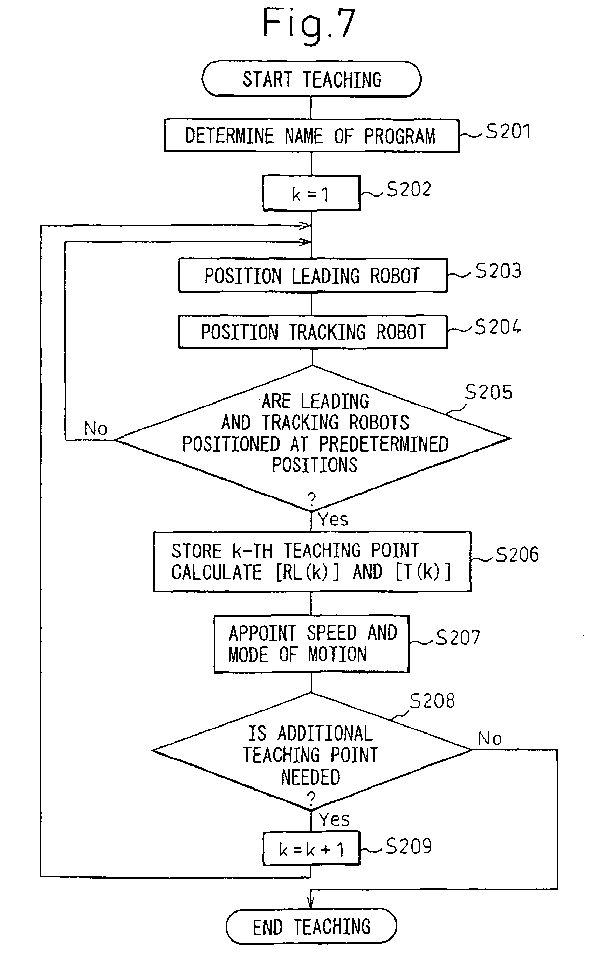

Next, a procedure of a teaching operation is described according to a flowchart shown in Fig. 7. First, in step S201, a name of a motion program to be prepared is determined. The determined name is stored in the non-volatile memory 18 in Fig. 5. In step S202, an index given to each teaching point is initialized. Then, in step S203, the robot 1 is moved and positioned by a manual feed using the teaching panel 12 such that the tool 2 is desirably positioned and orientated.

In next step S204, relative to the tool 2 positioned in step S203, the robot 6 is moved and positioned by a manual feed using the teaching panel 12 such that the workpiece 4 is desirably positioned and orientated. In step S205, it is judged whether the robots 1 and 6 are positioned at desirable positions. If yes, the procedure progresses to step S206. Otherwise, the procedure returns to step S203 so as to correct the positions of the robots. In step S206, a k-th teaching point (k=1, 2 ...) is stored.

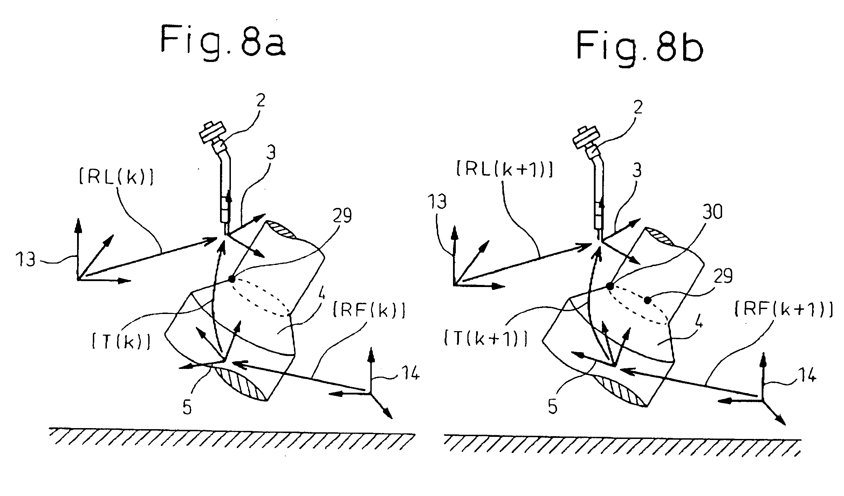

Data stored in the non-volatile memory 18 are explained below, with reference to Figs. 8a and 8b indicating k-th and k+1-th teaching points, respectively.

First, by storing the k-th teaching point 29, the position and the orientation of the first tool coordinate system 3 at the k-th teaching point relative to the first referential coordinate system 13, represented by a homogeneous transformation matrix [RL(k)], may be calculated using an equation (2) below. In the equation, elements $1(k)_x$ - $1(k)_z$ each having a superscript "RL" represent the position of the first tool coordinate system 3 on the first referential coordinate system 13. Further, elements $n(k)_x$ - $n(k)_2$, $o(k)$, - $o(k)_2$ and $a(k)_x$ - $a(k)_z$ each having a superscript "RL" represent the orientation of the first tool coordinate system 3 on the first referential coordinate system 13. Needless to say, these elements may be calculated from current position data of the robot 1.

Next, the position and the orientation of the second tool coordinate system 5 at the k-th teaching point relative to the second referential coordinate system 14, represented by a homogeneous transformation matrix [RF(k)], may be calculated using an equation (3) below. Each element in the equation (3) may also be calculated from current position data of the robot 6, similarly to the case of the equation (2).

$$[RL(k)] = \begin{bmatrix} n(k)^{RL}_x & o(k)^{RL}_x & a(k)^{RL}_x & l(k)^{RL}_x \\ n(k)^{RL}_y & o(k)^{RL}_y & a(k)^{RL}_y & l(k)^{RL}_y \\ n(k)^{RL}_z & o(k)^{RL}_z & a(k)^{RL}_z & l(k)^{RL}_z \\ 0 & 0 & 0 & 1 \end{bmatrix} \quad \ldots \text{(Equation 2)}$$

$$[RF(k)] = \begin{bmatrix} n(k)^{RF}_x & o(k)^{RF}_x & a(k)^{RF}_x & l(k)^{RF}_x \\ n(k)^{RF}_y & o(k)^{RF}_y & a(k)^{RF}_y & l(k)^{RF}_y \\ n(k)^{RF}_z & o(k)^{RF}_z & a(k)^{RF}_z & l(k)^{RF}_z \\ 0 & 0 & 0 & 1 \end{bmatrix} \quad \ldots \text{(Equation 3)}$$

Using the equations (1) - (3), the position and the orientation of the first tool coordinate system 3 at the k-th teaching point relative to the second tool coordinate system 5, represented by a homogeneous transformation matrix [T(k)], may be calculated by an equation (4) below. Further, a right-hand side of the equation (4) may be represented by an equation (5).

$$[T(k)] = [RF(k)]^{-1} [BASE\_XF][RL(k)] \quad \ldots \text{(Equation 4)}$$

$$= \begin{bmatrix} n(k)^T_x & o(k)^T_x & a(k)^T_x & l(k)^T_x \\ n(k)^T_y & o(k)^T_y & a(k)^T_y & l(k)^T_y \\ n(k)^T_z & o(k)^T_z & a(k)^T_z & l(k)^T_z \\ 0 & 0 & 0 & 1 \end{bmatrix} \quad \ldots \text{(Equation 5)}$$

In such a way, by storing the k-th teaching point in step S206, data of the position and the orientation of the leading robot and data of the relative positions and the relative orientations of the leading robot and the tracking robot are stored in the non-volatile memory 18, corresponding to an index "k" of the teaching point in an operating program. In the next step S207, the mode and the speed of the motion of the robots toward the teaching point are determined. In this case, the mode includes data indicating whether the robots at the teaching point must be operated by cooperative control. Data of the mode and the speed are also stored in the non-volatile memory 18, corresponding to the index "k".

Next, in step S208, it is judged whether a new teaching point must be added. If yes, the steps from step S203 are repeated in relation to a teaching point having an index "k+1". Therefore, the matrixes [RL(k)], [RF(k)] and [T(k)] corresponding to the above equations (2), (3) and (5) may be calculated in relation to a k+1-th teaching point 30 in Fig. 8b. The matrixes [RL(k)] and [RF(k)] are stored in the non-volatile memory 18.

The above steps from S203 to S208 are repeated by the number of required teaching points. When it is judged that adding of a new teaching point is not necessary in step S208, the teaching operation is terminated.

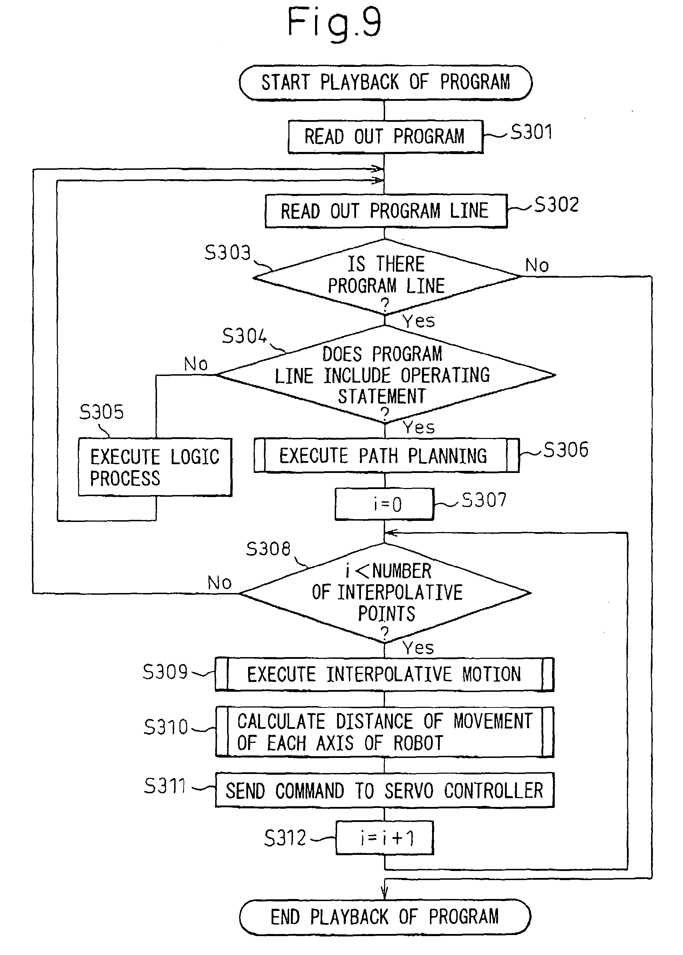

Next, a procedure of a playback operation is described according to a flowchart shown in Fig. 9. First, in step S301, a designated operating program (the above taught program in this case) is read out from the non-volatile memory 18 and program lines of the program are sequentially read from the start in step S302.

In next step S303, if there is no program line to be read, the playback of the program is terminated, otherwise, the procedure progresses to S304. In step S304, it is judged whether the read program line includes an operating statement. If yes, the procedure progresses to S206. Otherwise, the procedure progresses to S305 for carrying out logic process and returns to step S302 for reading a next program line.

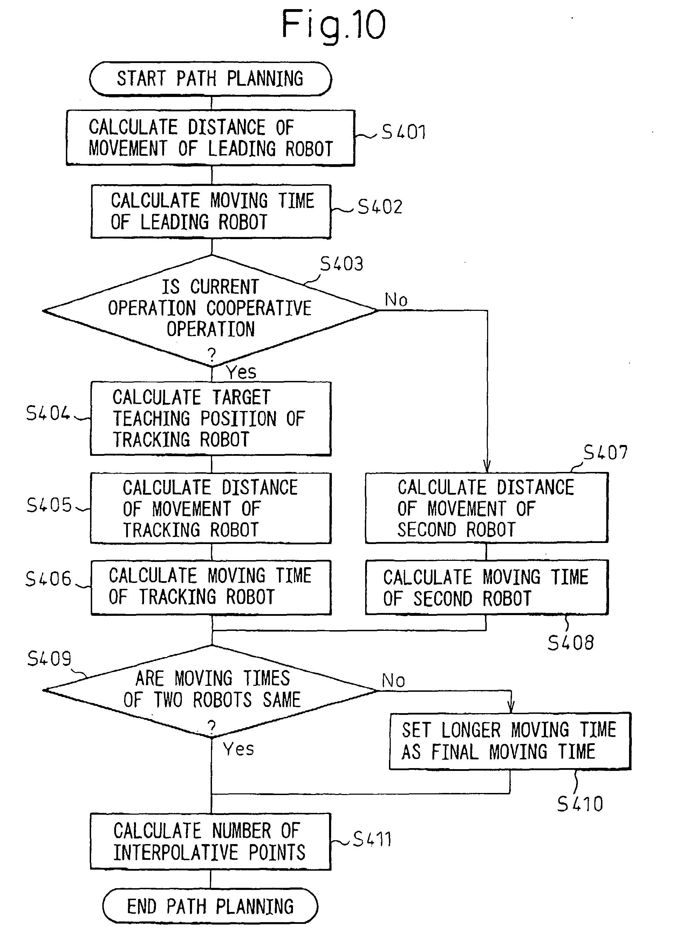

A method for planning a path carried out in step S306 is described using a flowchart as shown in Fig. 10. First, in step S401, the distance of movement of the leading robot is calculated by using a targeted teaching position and a starting position (or a current position) of the leading robot programmed in the program line. The targeted teaching position of the program corresponds to the position of the leading robot stored during the above teaching operation (or in step S206 of Fig. 7).

Next, in step S402, the moving time of the leading robot is calculated by dividing the distance calculated in step S401 by the programmed speed of the motion. The programmed speed corresponds to the commanded speed of the motion of the leading robot stored during the above teaching operation (or in step S207 of Fig. 7).

When the operating statement includes cooperative motion, a targeted teaching position of the tracking robot is stored as a relative position to the leading robot. Therefore, in step S404, the targeted teaching position of the tracking robot may be calculated by using the targeted teaching position of the leading robot and the relative position of the tracking robot to the leading robot. The above equation (4) may be used for calculating the targeted teaching position of the tracking robot.

When the operating statement does not include cooperative motion, step S404 is not necessary, because a targeted teaching position of a second robot is stored.

In steps S405 and S406, the distance of movement and the moving time of the tracking robot are calculated, as in the leading robot. In other words, the distance of movement of the tracking robot is calculated by using a targeted teaching position and a starting position (or a current position) of the tracking robot and, then, the moving time of the tracking robot is calculated by dividing the calculated distance by the programmed speed of the motion. When the operating statement does not include the cooperative motion, steps S407 and S408 are executed instead of steps S405 and S406. However, the method of calculation of steps S407 and S408 may be the same as that of steps S405 and S406.

At this point, in order to synchronize the two robots, the process for equalizing the moving time of one robot with that of the other robot is carried out. In step S409, when the moving time of the two robots are the same, the moving time is the final moving time. When the moving time of the robots are different form each other, the longer one is determined as the final moving time in step S410. In step S411 at the end of the path planning, the number of interpolative points of the motion is calculated by dividing the determined moving time by a period of calculation time (or a unit time for the interpolative motion normally set to a several milliseconds; called "ITP"). The above is a method for executing the path planning.

Next, the procedure is returned to the playback operation of the flowchart as shown in Fig. 9. The above path planning in step S306 is done, a variable "i" representing a current interpolative point is initialized in step S307. In step S308, when the number of the interpolative points up to the current has not reached the number calculated in the path planning, the procedure progresses to step S309 so as to carrying out the process of the interpolative motion.

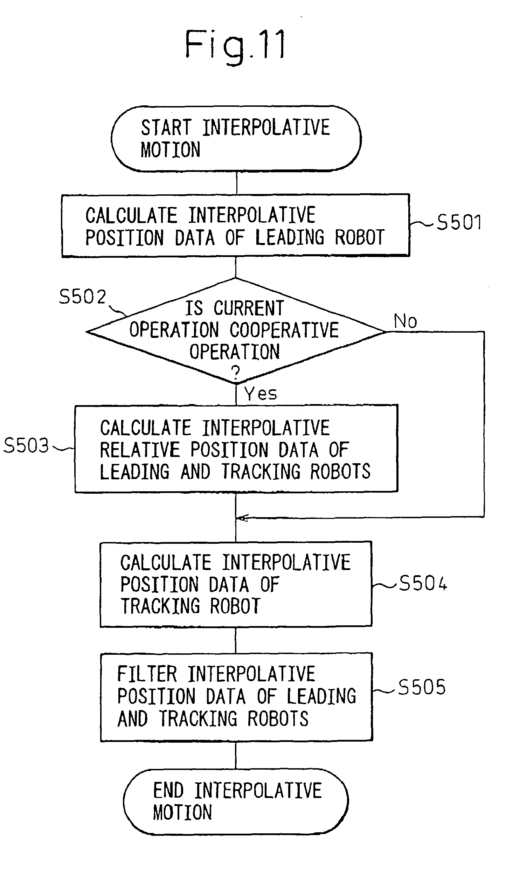

The detail of the process of the step S309 is described with reference to a flowchart as shown in Fig. 11. First, in step S501, data of the interpolative position of the leading robot is calculated, by adding a value multiplied by the index "i+1" (the index "i" is the current number of the interpolative points) to the starting position of the leading robot at the current program line, the value being calculated by dividing the distance of movement of the leading robot calculated in step S401 by the number of the interpolative points.

Next, in step S502, it is judged whether the current motion is the cooperative motion. If yes, data of the relative positions of the leading and tracking robots interpolated as in step S501 is calculated in step S503. Otherwise, step S503 is not necessary. Finally, in step S504, data of the interpolative position of the tracking robot is calculated by using the interpolative position data and the interpolated relative position data of the leading robot. The interpolative position data is outputted in a time-series manner at every the calculation period (ITP). At this point, the trajectory of the two robots may be smoothed by filtering (or smoothing) the time-series data and sending the data to the servo controller.

In the present invention, first and second filtering methods are used as the above filtering process. First, when the first filtering method is used, the filtering is applied to the calculated interpolative position data of the leading and tracking robots in step S505.

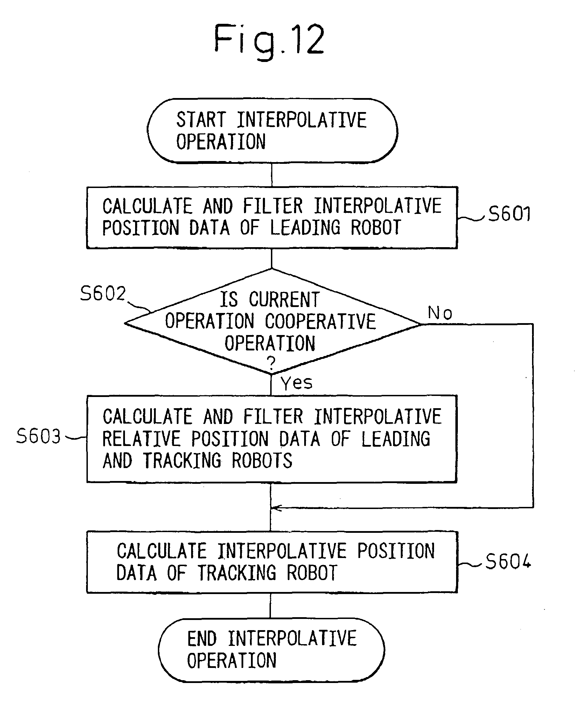

On the other hand, the second filtering method is described in a flowchart as shown in Fig. 12. First, in comparison to the first filtering method, the filtering is applied to the interpolative position data of the leading robot in step S601. Then, the filtering is applied to the interpolative relative position data of the leading and tracking robots in step S603. Further, the interpolative position data of the tracking robot is calculated using the interpolative position data of the leading robot and the interpolative relative position data of the leading and tracking robots after the filtering, in step S604. Therefore, the flowchart of Fig. 12 indicating the second filtering method does not need a step corresponding step S505 in the flowchart of Fig. 11.

After the interpolative motion, in step S310 of Fig. 9, the distance of movement of each axis of the robot arm at an i-th interpolative point (i.e., the distance from the preceding interpolative point) is calculated based on the interpolative position data of the leading and tracking robots. The calculated distance is included in a command sent to the servo controller (step S311) and the index "i" representing the current number of the interpolative points is increased by one (step S312).

The procedure from step S309 to step S312 is carried out within one calculation period. The procedure is repeated by the number of the interpolative points and the interpolative motion regarding the program line of the motion program is terminated. After that, the procedure returns to step S302 so as to read out a next program line of the program. The procedure from step S302 to step S312 is repeated until the last program line of the program is read cut. When the last program line is read out, the playback of the program is terminated.

The first embodiment of the invention is described above. Hereinafter, second to fifth embodiments are explained. In this connection, the same numeral as the first embodiment is added to the same component of the second to fifth embodiments. Further, common matter is not repeated.

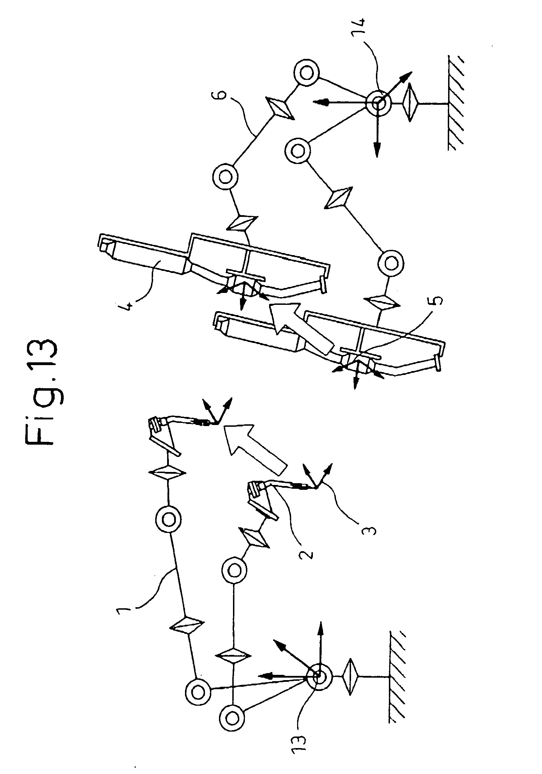

In the second embodiment relates to the motion by manual feeding. As shown in Fig. 13, the first coordinate system 3 set on the tool 2 attached to the leading robot 1 is orthogonally moved relative to the first referential coordinate system 13 of the leading robot 1 by the manual feed.

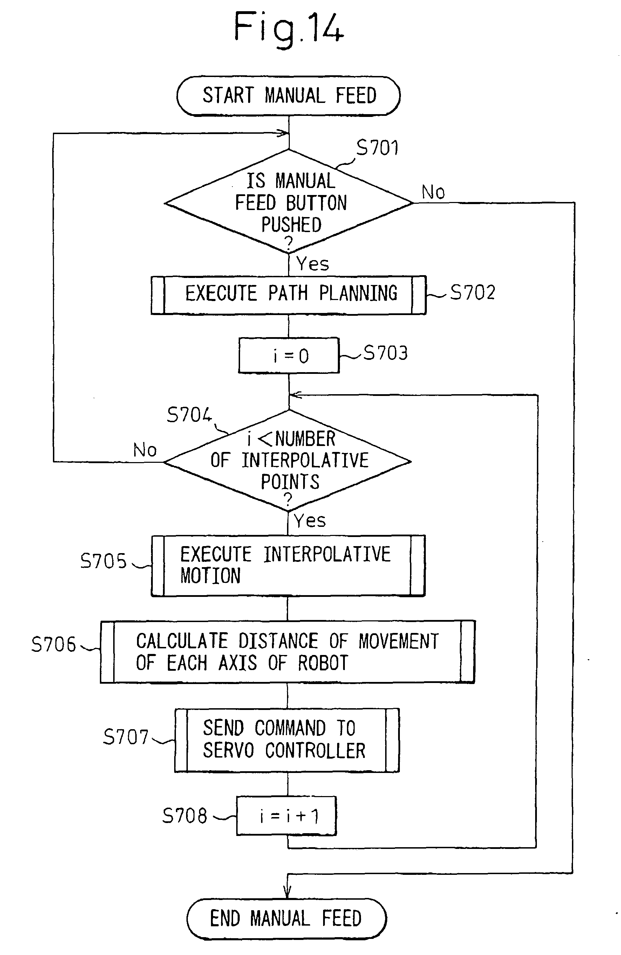

Corresponding to such a manual feed, the second coordinate system 5 set on the workpiece 4 gripped by the tracking robot 6 may be controlled such that the position and the orientation of the second coordinate system 5 is maintained relative to the first coordinate system 3 set on the tool 2. The control method in this embodiment is basically the same as the playback operation of the program, except that the command for moving the leading robot 1 is based on a command from the teaching panel 12, not on the teaching program. Therefore, the procedure in the second embodiment may be indicated by a flowchart as shown in Fig. 14.

In case of the manual feed, the robot is activated by pushing a manual feed button on the teaching panel 12. In step S701, it is judged whether the button on the teaching panel is pushed. If yes, the path planning is step S702 is carried out, corresponding to the pushing time of the button and the direction appointed by the manual feed. The interpolative motion in step S705 is carried out such that the relative position data calculated in step S503 in Fig. 11 or step S603 in Fig. 12 are not changed.

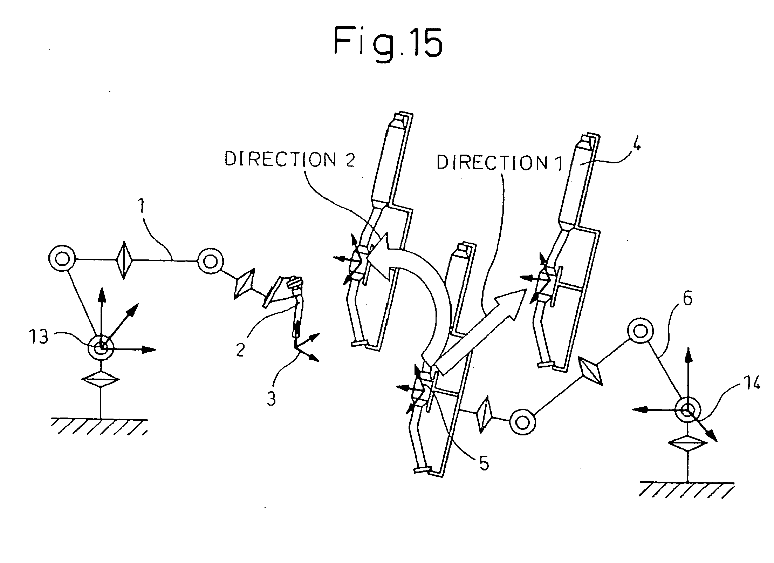

In the third embodiment of the invention, as shown in Fig. 15, the tracking robot 6 is controlled such that the second coordinate system 5 set on the workpiece 4 gripped by the robot 6 is desirably translated (in the direction 1) and rotated (in the direction 2) by the manual feed, relative to the first coordinate system 3 set on the tool 2 of the leading robot 1. The feature of this embodiment is that the coordinate system serving as a referential coordinate system for the motion of the tracking robot 6 is set on the tool 2 attached to the leading robot 1. The procedure in the embodiment may be the same as that shown in Fig. 14. However, regarding step S705 for the interpolative motion, the relative position data is calculated based on the appointed direction of the motion by operating the manual feed button in step S503 in Fig. 11 or step S603 in Fig. 12.

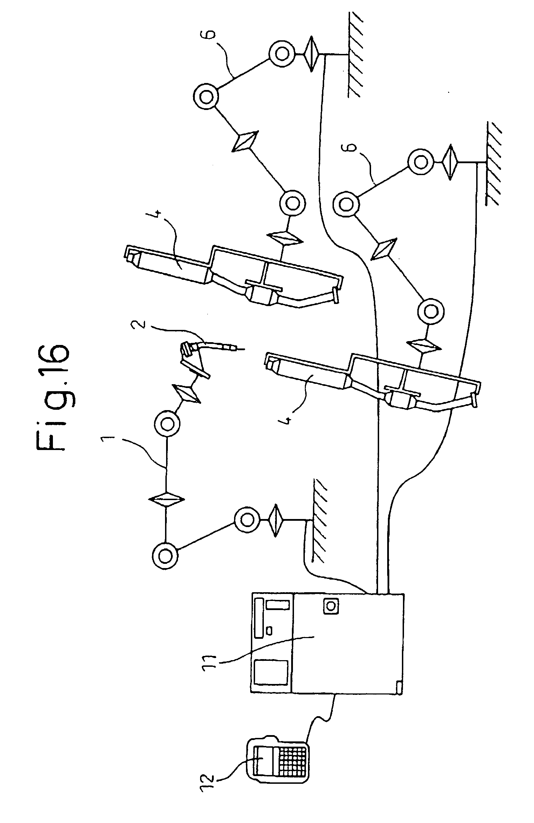

The fourth embodiment of the invention includes, as shown in Fig. 16, a plurality of the tracking robots 6 of the first embodiment in cooperative operation. These robots are controlled by one robot control device 11. Various matters of this embodiment may be the same as the first embodiment, except that a plurality of procedures for the tracking robots are necessary in relation to calibration of the leading robot 1 and each of the tracking robots 6, the teaching operation and the playback operation.

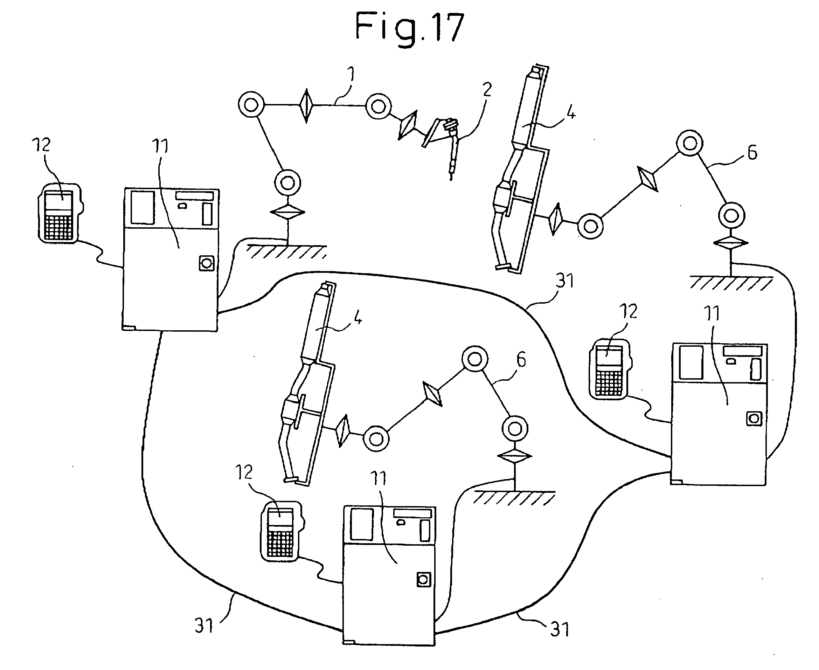

Finally, the fifth embodiment of the invention includes a plurality of control devices 11 for controlling the leading and tracking robots 1 and 6, as shown in Fig. 17. The plurality of control devices 11 communicate with each other through communication lines 31 each connecting one control device to another, whereby the control devices 11 synchronously carry out the cooperative control. As a method for the communication, for example, a method disclosed in Japanese Patent Publication No. 3538362 may be used.

According to the method for controlling the trajectory of a robot, in relation to the leading robot having a work tool and the tracking robot gripping the workpiece, the cooperative control may be carried out in which the work tool may move along a desired trajectory on the coordinate system set on the workpiece, while the position and the orientation of the work tool may be desirably controlled at every calculation period for the interpolative motion.

Further, the invention has remarkable features as shown below:

(1) When the invention is applied to a welding operation, the position and the orientation of a welding torch is desirably adjusted, during a teaching operation and without a difficulty, whereby the quality of the welding may be raised.

(2) According to the invention, the relative positions and the relative orientations of the coordinate systems set on the work tool and the workpiece are calculated in every calculation period for the interpolative motion and the relative positions and the relative orientations may be desirably controlled in any time during operation.

(3) According to the invention, the leading robot may be moved by a manual feed, while the relative positions and the relative orientations of the coordinate systems set on the work tool and the workpiece are maintained. Also, the coordinate system set on the workpiece may be desirably translated and rotated on the coordinate system set on the tool. Therefore, the operability of the manual feed for operating a plurality of robots may be raised.

(4) By follow-up control of a plurality of tracking robots and a leading robot, various operations may be carried out.

(5) One or more control devices may be used for controlling each robot in the cooperative operation. When one control device is used, the cost of a whole system may be reduced. When a plurality of control devices are used, on the other hand, existing independent control devices may be converted into the control devices of the cooperative control system of the invention.

While the invention has been described with reference to specific embodiments chosen for the purpose of illustration, it should be apparent that numerous modifications could be made thereto, by one skilled in the art, without departing from the basic concept and scope of the invention.

**Claims**

1. A method for controlling a trajectory of a robot when a plurality of robots are operated by cooperative control, the plurality of robots including a leading robot (1) having a work tool (2) and at least one tracking robot (6) holding a workpiece (4) to be processed by the work tool (2), **characterized in that** the method comprises:

    controlling the position and the orientation of the tracking robot (6) corresponding to the change of the position and the orientation of the leading robot (1) such that the position and the orientation of a first tool coordinate system (3) set on the leading robot (1) moves along a desired trajectory on a second tool coordinate system (5) set on the tracking robot (6).

2. The method as set forth in claim 1,
**characterized in that** the method comprises:

    preparing a plurality of teaching points by teaching an operating position of each of the leading robot (1) and the tracking robot (6);
    calculating the interpolative position and the interpolative orientation of the first tool coordinate system (3) of the leading robot (1) by interpolating the position and the orientation of the first coordinate system (3) at the teaching points of the leading robot (1) at every interpolative time during a playback operation;
    determining the relative position and the relative orientation of the first tool coordinate system (3) of the leading robot (1) to the second tool coordinate system (5) of the tracking robot (6) at every interpolative time by interpolating the relative position and the relative orientation of the first tool coordinate system (3) at the teaching point;
    calculating the interpolative position and the interpolative orientation of the second tool coordinate system (5) of the tracking robot (6) based on the interpolative position and the interpolative orientation of the first tool coordinate system (3) of the leading robot (1) and the relative position and the relative orientation of the first tool coordinate system (3) of the leading robot (1) at every interpolative time; and
    controlling each joint of the leading robot (1) and the tracking robot (6) such that the positions and the orientations of the first and second coordinate systems (3, 5) are maintained.

3. The method as set forth in claim 1, **characterized in that** the method comprises controlling the position and the orientation of the tracking robot (6) such that the relative position and the relative orientation of the tracking robot (6), to the leading robot (1), are maintained when the position and the orientation of the leading robot (1) is changed by manual feeding.

4. The method as set forth in claim 1, **characterized in that** the method comprises manually feeding the tracking robot (6) such that the second tool coordinate system (5) is desirably translated and rotated on the first tool coordinate system (3).

5.  The method as set forth in claim 1, **characterized in that** the method comprises cooperatively operating a plurality of tracking robots (6) relative to the motion of one leading robot (1).

6.  The method as set forth in claim 1, **characterized in that** the method comprises cooperatively controlling all of the leading robot (1) and the tracking robot (6) by using one control device (11).

7.  The method as set forth in claim 1, **characterized in that** the method comprises cooperatively controlling the leading robot (1) and the tracking robot (6) by using a plurality of control devices (11) and by communicating between each of the control devices (11).

8.  The method as set forth in claim 1,
    **characterized in that** the method comprises:

    filtering a time-series of data representing the interpolative position and the interpolative orientation of the first tool cooperative system (3) of the leading robot (1);
    calculating the interpolative position and the interpolative orientation of the second tool coordinate system (5) of the tracking robot (6) based on the time-series of data before the filtering and the relative position and the relative orientation of the first coordinate system (3) at every interpolative time; and
    filtering a time-series of data representing the interpolative position and the interpolative orientation of the second tool coordinate system (5) of the tracking robot (6) after calculating the interpolative position and the interpolative orientation of the second tool coordinate system (5).

9.  The method as set forth in claim 1,
    **characterized in that** the method comprises:

    filtering a time-series of data representing the interpolative position and the interpolative orientation of the first tool cooperative system (3) of the leading robot (1);
    filtering a time-series of data representing the relative position and the relative orientation of the first tool coordinate system (3) of the leading robot (1) at every interpolative time; and
    calculating the interpolative position and the interpolative orientation of the second tool coordinate system (5) of the tracking robot (6) based on the interpolative position and the interpolative orientation and the relative position and the relative orientation of the first tool coordinate system (3) of the leading robot (1) after the filtering.

# Fig.1
## PRIOR ART

# Fig.2
## PRIOR ART

# Fig.3a
PRIOR ART

# Fig.3b
PRIOR ART

# Fig.3c
PRIOR ART

θa

θb

θc

2

9

8

8

9

9

8

4

10

θ

EP 1 642 690 A2

# Fig.4

EP 1 642 690 A2

# Fig.5

CONTROL DEVICE

11

CPU — 15

16
ROM

18

17
RAM

NON-VOLATILE
MEMORY

22

COMMON MEMORY

19

23

I/O

SERVO
CONTROLLER

21      20

TEACHING
PANEL I/F

24

SERVO
AMPLIFIER — 24

SERVO
AMPLIFIER

TO EXTERNAL
EQUIPMENT

TEACHING
PANEL

12

SENSOR

26
M

28

ARM

27

25

SENSOR

26
M

28

ARM

27

25

# Fig.6

```
┌─────────────────────────┐
│   START INSTALLING AND  │
│    SETTING OF ROBOT     │
└─────────────────────────┘
            │
┌─────────────────────────┐
│   PREPARE ROBOTS FOR    │ ~S101
│   TOOL AND WORKPIECE    │
└─────────────────────────┘
            │
┌─────────────────────────┐
│    INSTALL EACH ROBOT   │ ~S102
└─────────────────────────┘
            │
┌─────────────────────────┐
│  SETTING LEADING ROBOT  │ ~S103
│   AND TRACKING ROBOT    │
└─────────────────────────┘
            │
┌─────────────────────────┐
│   EXECUTE CALIBRATION   │ ~S104
└─────────────────────────┘
            │
┌─────────────────────────┐
│    END INSTALLING AND   │
│     SETTING OF ROBOT    │
└─────────────────────────┘
```

# Fig.7

```
            ( START TEACHING )
                    │
    ┌───────────────────────────────┐
    │ DETERMINE NAME OF PROGRAM     │──S201
    └───────────────────────────────┘
                    │
            ┌─────────────┐
            │   k = 1     │──S202
            └─────────────┘
                    │
```

DETERMINE NAME OF PROGRAM —S201

k = 1 —S202

POSITION LEADING ROBOT —S203

POSITION TRACKING ROBOT —S204

ARE LEADING AND TRACKING ROBOTS POSITIONED AT PREDETERMINED POSITIONS ? —S205

No / Yes

STORE k-TH TEACHING POINT CALCULATE [RL(k)] AND [T(k)] —S206

APPOINT SPEED AND MODE OF MOTION —S207

IS ADDITIONAL TEACHING POINT NEEDED ? —S208

No / Yes

k = k + 1 —S209

END TEACHING

Fig.8a

Fig.8b

EP 1 642 690 A2

# Fig.9

START PLAYBACK OF PROGRAM

READ OUT PROGRAM —S301

READ OUT PROGRAM LINE —S302

S303 — IS THERE PROGRAM LINE ? — No

Yes

S304 — DOES PROGRAM LINE INCLUDE OPERATING STATEMENT ? — No

Yes

S305 — EXECUTE LOGIC PROCESS

EXECUTE PATH PLANNING —S306

$i=0$ —S307

S308 — $i <$ NUMBER OF INTERPOLATIVE POINTS ? — No

Yes

S309 — EXECUTE INTERPOLATIVE MOTION

S310 — CALCULATE DISTANCE OF MOVEMENT OF EACH AXIS OF ROBOT

S311 — SEND COMMAND TO SERVO CONTROLLER

S312 — $i=i+1$

END PLAYBACK OF PROGRAM

# Fig.10

START PATH PLANNING

CALCULATE DISTANCE OF MOVEMENT OF LEADING ROBOT — S401

CALCULATE MOVING TIME OF LEADING ROBOT — S402

IS CURRENT OPERATION COOPERATIVE OPERATION ? — S403

No

Yes

CALCULATE TARGET TEACHING POSITION OF TRACKING ROBOT — S404

CALCULATE DISTANCE OF MOVEMENT OF TRACKING ROBOT — S405

CALCULATE MOVING TIME OF TRACKING ROBOT — S406

CALCULATE DISTANCE OF MOVEMENT OF SECOND ROBOT — S407

CALCULATE MOVING TIME OF SECOND ROBOT — S408

ARE MOVING TIMES OF TWO ROBOTS SAME ? — S409

No

SET LONGER MOVING TIME AS FINAL MOVING TIME — S410

Yes

CALCULATE NUMBER OF INTERPOLATIVE POINTS — S411

END PATH PLANNING

# Fig.11

START INTERPOLATIVE MOTION

CALCULATE INTERPOLATIVE POSITION DATA OF LEADING ROBOT — S501

S502 — IS CURRENT OPERATION COOPERATIVE OPERATION ?

No

Yes

S503 — CALCULATE INTERPOLATIVE RELATIVE POSITION DATA OF LEADING AND TRACKING ROBOTS

CALCULATE INTERPOLATIVE POSITION DATA OF TRACKING ROBOT — S504

FILTER INTERPOLATIVE POSITION DATA OF LEADING AND TRACKING ROBOTS — S505

END INTERPOLATIVE MOTION

# Fig.12

START INTERPOLATIVE
OPERATION

CALCULATE AND FILTER INTERPOLATIVE
POSITION DATA OF LEADING ROBOT — S601

S602 — IS CURRENT
OPERATION COOPERATIVE
OPERATION
?

No

Yes

S603 — CALCULATE AND FILTER INTERPOLATIVE
RELATIVE POSITION DATA OF LEADING
AND TRACKING ROBOTS

CALCULATE INTERPOLATIVE POSITION
DATA OF TRACKING ROBOT — S604

END INTERPOLATIVE
OPERATION

Fig.13

# Fig.14

```
          START MANUAL FEED

                  │
                  ▼
              ◇ S701
         IS MANUAL
         FEED BUTTON ──── No ──┐
           PUSHED              │
              ?                │
             │ Yes             │
             ▼                 │
     EXECUTE PATH PLANNING ~S702│
             │                 │
             ▼                 │
           i = 0  ~S703        │
             │                 │
             ▼                 │
       S704                    │
             ◇                 │
    No ──  i < NUMBER          │
           OF INTERPOLATIVE ◄──┤
             POINTS            │
               ?               │
             │ Yes             │
             ▼                 │
S705 ─  EXECUTE INTERPOLATIVE  │
             MOTION            │
             │                 │
             ▼                 │
S706 ─ CALCULATE DISTANCE OF MOVEMENT
       OF EACH AXIS OF ROBOT   │
             │                 │
             ▼                 │
S707 ─  SEND COMMAND TO        │
        SERVO CONTROLLER       │
             │                 │
             ▼                 │
S708 ─    i = i + 1 ───────────┘
             │
             ▼
         END MANUAL FEED
```

# Fig.15

DIRECTION 2     DIRECTION 1

EP 1 642 690 A2

Fig.16

# Fig.17

EP 1 642 690 A2